Europäisches Patentamt

**European Patent Office**

**Office européen des brevets**

(11) Publication number: **0 289 301**
**A2**

# EUROPEAN PATENT APPLICATION

(21) Application number: **88303838.2**

(22) Date of filing: **28.04.88**

(51) Int. Cl.⁴: **B 60 T 11/20**

(30) Priority: **30.04.87 GB 8710273**

(43) Date of publication of application:
**02.11.88 Bulletin 88/44**

(84) Designated Contracting States: **DE FR GB IT**

(71) Applicant: **LUCAS INDUSTRIES public limited company**
**Great King Street**
**Birmingham, B19 2XF West Midlands (GB)**

(72) Inventor: **Colgate, Brian Martin**
**Old House The Rocks Clearwell Meend**
**Coleford Gloucestershire, GL16 8JR (GB)**

(74) Representative: **Waite, Anthony William et al**
**MARKS & CLERK Alpha Tower Suffolk Street Queensway**
**Birmingham B1 1TT (GB)**

(54) **Master cylinder assembly.**

(57) A master Cylinder assembly includes a plurality of pressure cylinders (1, 2) and a connecting member (3) interconnecting respective ends (2A) of the cylinders. The connecting member incorporates a transfer passage (30) and associated valve means (27) for controlling fluid flow between the cylinders (1, 2) via the transfer passage.

FIG I

## Description

## MASTER CYLINDER ASSEMBLY.

This invention relates to a master cylinder assembly, primarily for a vehicle hydraulic braking system, and of the general kind having a plurality of pressure cylinders between which extends a transfer passage controlled by valve means to permit communication between respective pressure chambers of the cylinders when the cylinders are actuated simultaneously and to prevent such communication when one of the cylinders is operated individually. Such an assembly is of particular use in an agricultural tractor, for example, in which normal straight-line braking is accomplished by the simultaneous actuation of a pair of cylinders and steering assistance can be provided by actuating one or other of the cylinders individually.

The invention is particularly concerned with the provision of the transfer passage in such an assembly and has for an object to provide a master cylinder assembly of the aforesaid general kind in which this passage is provided in a simple, convenient and cost-effective manner and in which said valve means may also be readily and conveniently accommodated.

According to the present invention, a master cylinder assembly comprises a plurality of pressure cylinders, a connecting member interconnecting respective portions of the cylinders and containing a conduit communicating with the interiors of the cylinders to act as a transfer passage, said member also accommodating valve means acting to control fluid flow between the cylinders through the transfer passage.

Preferably, said connecting member interconnects respective end portions of the cylinders and is conveniently provided with attachment means, such as projecting bolts, serving for the attachment of the assembly to a support, said means being at the opposite side of the connecting member to the cylinders.

Typically, the connecting member is a separately made component and respective open end portions of the cylinders are secured therein.

The invention will now be described, by way of example, with reference to the accompanying drawings in which:-

Figure 1 is a longitudinal cross-section of one form of the master cylinder assembly of the invention, and

Figure 2 is an end view from the left of the master cylinder of Figure 1.

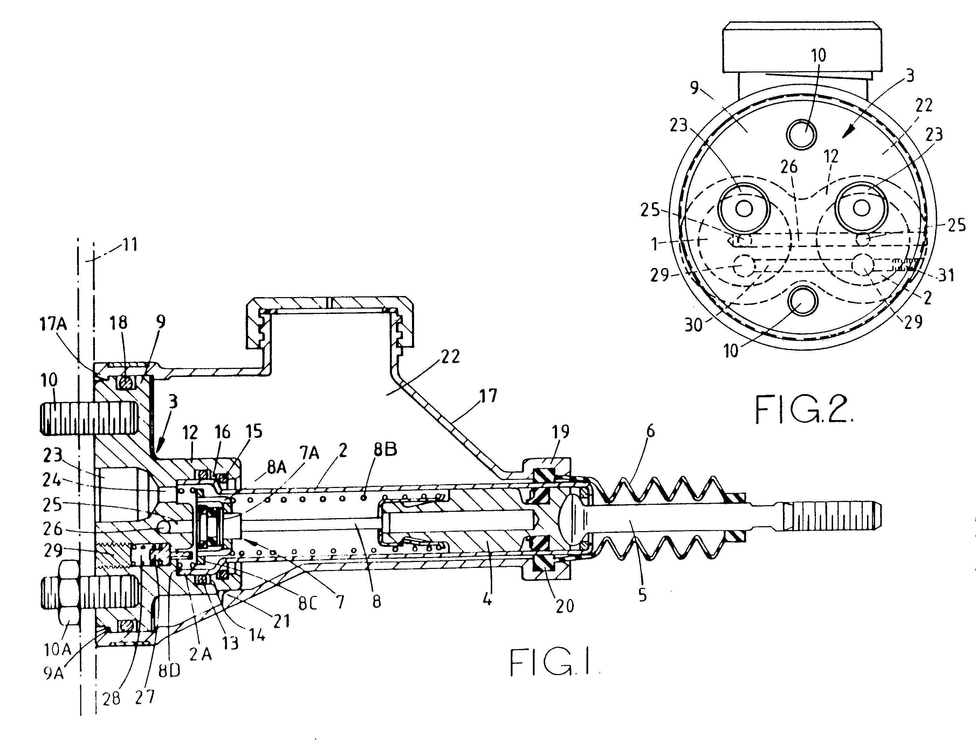

The master cylinder assembly illustrated in Figures 1 and 2 comprises a pair of distinct pressure cylinders 1, 2 carried by a separately made end member, indicated generally at 3. The cylinders, in the embodiment illustrated, are thin-walled drawn metal tubes, each containing a piston 4 operable by a force input rod 5 surrounded by a protective boot 6, the piston actuating a centre valve mechanism 7 by means of a rod 8, in conventional manner.

The end member 3 includes a radial flange 9 having thereon attachment means, illustrated as threaded studs or bolts 10 projecting in the opposite direction to the cylinders 1, 2. The master cylinder assembly is mounted on a fixed support 11, such as a vehicle bulkhead for example, by way of the flange 9 and the bolts project through holes in the support and would normally co-operate with securing nuts 10A to retain the assembly securely in position on the support. The end member 3 also has a boss 12 projecting in the opposite direction to the studs 10 and having a pair of cylindrical recesses which respectively receive enlarged end portions 2A of the two pressure cylinders 1, 2. Respective seals 13 are housed in grooves 14 surrounding the cylinder to seal between the outer surface of each portion 2A and the internal surface of the associated groove. Each cylinder 1, 2 is retained in position by a circlip or similar device 15 housed in a further groove 16 of the boss and engaging behind the enlarged cylinder end portion 2A.

A reservoir element 17 surrounds the pressure cylinders 1, 2 and boss 12 of the end member 3 and is mounted at one of its ends around the flange 9 with a radially inwardly projecting rim 17A engaging behind a shoulder 9A of each cylinder. A seal 18 is interposed between the reservoir element and flange 9. The other end of the reservoir element is mounted around an end portion of each cylinder 1, 2. In this area, the reservoir element 17 is provided with an end portion 19 of increased thickness which is internally shaped to receive beads 20 of the boots 6, the beads bearing against the outer surfaces of the cylinders to act as a seal and being secured in position by engagement with the portion 19 of the reservoir element. Additional support for the reservoir element is afforded by one or more internal projections 21 which engage the external surface of the boss 12. The space 22 between the reservoir element 17 and the external surfaces of the boss 12 and cylinders 1, 2 form the reservoir proper which contains a quantity of hydraulic fluid for supply to the interior of the cylinders 1, 2.

The end member 3 forms a pair of port connections 23 which communicate via internal passages 24 with the interiors of the pressure cylinders 1, 2 to enable the cylinders to be connected to actuators associated respectively with wheel brakes at either side of a vehicle such as an agricultural tractor. The end member 3 also contains recuperation ports 25 controlled, in conventional manner, by the centre valve mechanisms 7 in the cylinders and being connected by a passage 26 to the reservoir space 22, enabling fluid to pass between the reservoir and the interiors of the pressure cylinders when the centre valve mechanisms are in their open positions, as shown. Respective valve members 27 of the valve mechanisms are housed in bores 28 of the element 3, the bores being closed by plugs 29 after insertion of the valve members. The bores 28 are interconnected by a passage 30 which forms a transfer passage between the two cylinders, the flow of fluid through which is controlled by the valve members 27 in the manner to be described. After the formation of the passage 30, the latter is closed by a plug 31.

The rod 8 of each centre valve mechanism carries a cup-shaped element 8A urged against a head 7A of the valve 7 by a spring 8B. The element 8A has a radial flange 8C between which and a surface of the body 9 acts a further spring 8D in opposition to the spring 8B. Upon forward movement of the pistons for simultaneous actuation of both brakes, the elements 8A move forward with the valves 7 and as the latter close off the recuperation ports 25 to permit pressure build-up in the cylinders, the elements 8A engage the valve members 27, causing the latter to move away from their seats against their spring loading to permit communication between the cylinders via the transfer passage 30. The cup elements 8A and valve members 27 are preferably arranged so that the valve members are displaced from their closed positions just prior to the valves 7 closing. In the event that only one cylinder is operated, in order to perform a steering manoeuvre for example, only the valve member associated with the operative piston is opened and pressure from this cylinder acts through the transfer passage on the other valve member to hold the latter in its closed condition and thereby prevent communication between the cylinders. When the pressure is released, both valves return under spring load to their rest positions, as shown.

The invention will be seen to provide an extremely convenient and cost-effective way of providing the compensation passage and its various ports and associated valve elements in a single unit which also serves to support the cylinders 1, 2 and to mount the assembly on a fixed support. Because, in the embodiment described the actuating forces are pushing against the bulkhead and therefore more readily sustainable by the end member, the latter may possibly be made from light-weight material, such as plastics. Although the embodiment described uses drawn steel thin-walled pressure cylinders, it would be possible to incorporate the pressure cylinders and mounting element in a single casting or moulding. In an alternative arrangement, the end member may be used simply to accommodate the transfer and other passages and their associated components and an additional mounting flange may then be provided, conveniently at or near the other end of the assembly, for mounting purposes.

## Claims

1. A master cylinder assembly comprising a plurality of pressure cylinders (1, 2), characterised in that a connecting member (3) interconnects respective portions of the cylinders and contains a conduit (30) communicating with the interiors of the cylinders to act as a transfer passage, and that said member also accommodates valve means (27) acting to control fluid flow between the cylinders (1, 2) through the transfer passage.

2. A master cylinder assembly according to Claim 1 characterised in that said connecting member (3) interconnects respective end portions of the cylinders (1, 2).

3. A master cylinder assembly according to Claim 1 or Claim 2 characterised in that the connecting member (3) is provided with attachment means (10) serving for the attachment of the assembly to a support (11).

4. A master cylinder assembly according to Claim 3 characterised in that the attachment means (10) are at the opposite side of the connecting member (3) to the cylinders (1, 2).

5. A master cylinder assembly according to any one of the preceding claims, characterised in that the connecting member (3) is a separately made component and respective open end portions (2A) of the cylinders (1, 2) are secured therein.

6. A master cylinder assembly according to any one of the preceding claims characterised in that the connecting member (3) contains fluid recuperation ports (25) through which fluid flow is controlled by respective valve mechanisms (7) actuated by pistons (4) slidable in the cylinders.

7. A master cylinder assembly according to Claim 6 characterised in that each valve mechanism is associated with an abutment element (8A) arranged to co-act with an adjacent one of the valve means (27) to open the latter upon actuation of the valve mechanism.

8. A master cylinder assembly according to Claim 7 characterised in that each valve mechanism (7) is of the centre valve type and is surrounded by a cup (8A) which constitutes said abutment element and of which the forward peripheral edge co-acts with the adjacent valve means (27).

9. A master cylinder assembly according to Claim 6 characterised in that a reservoir element (17) surrounds the pressure cylinders (1, 2) in spaced relationship and is supported at its respective ends on the connecting member (3) and outer surface of the cylinder (2), the space (22) between the reservoir element (17) and the external surfaces of the cylinders and connecting member (3) forming a reservoir for hydraulic fluid and being connected via a passage (26) in the connecting member (3) to said recuperation ports (25).

10. A master cylinder assembly according to Claim 9 characterised in that the end portion of the reservoir element (17) engaging the connecting member (3) has a inwardly directed rim (17A) engaging behind a shoulder (9A) of the connecting member to provide axial retention in one direction.

11. A master cylinder assembly according to Claim 9 or Claim 10 characterised in that the end portion (19) of the reservoir element (17) engaging the cylinders acts to retain protective boots (6) for force input rods (5) of the cylinders (1, 2), the boots forming seals between the reservoir element and cylinders.

12. A master cylinder assembly according to any one of Claims 9 to 11 characterised in that one or more internal projections (21) of the reservoir element (17) engage part of the connecting member to provide additional support for the reservoir element.

0289301

FIG.1.

FIG.2.